# EUROPEAN PATENT SPECIFICATION

(11) **EP 4 239 829 B1**
(45) Date of publication and mention of the grant of the patent: **02.07.2025**
(21) Application number: 21957185.8
(22) Date of filing: 18.09.2021
(51) Int. Cl.: H02J 7/00

(54) **POWER BATTERY CHARGING METHOD, CHARGING APPARATUS, AND CHARGING SYSTEM**
VERFAHREN ZUM LADEN EINER LEISTUNGSBATTERIE, LADEVORRICHTUNG UND LADESYSTEM
PROCÉDÉ DE CHARGE DE BATTERIE D'ALIMENTATION, APPAREIL DE CHARGE ET SYSTÈME DE CHARGE

(43) Date of publication of application: 06.09.2023
(73) Proprietor: Contemporary Amperex Technology (Hong Kong) Limited, Central, Central And Western District (HK)
(72) Inventor: ZHANG, Wei, Ningde, Fujian 352100 (CN); CAI, Jinbo, Ningde, Fujian 352100 (CN); LOU, Qidong, Ningde, Fujian 352100 (CN)
(74) Representative: Ziebig Hengelhaupt Intellectual Property Attorneys Patentanwaltskanzlei PartGmbB
(86) International application number: PCT/CN2021/119453
(87) International publication number: WO 2023/039908

(56) References cited:
- CN-A- 107 769 316
- CN-A- 109 301 363
- CN-A- 109 904 850
- CN-A- 113 119 770
- JP-A- 2005 057 826
- KR-B1- 101 969 301

## Description

### TECHNICAL FIELD

This application relates to the field of battery technologies, and in particular, to a charging method, charging apparatus, and charging system for traction battery.

### BACKGROUND

With the consumption of non-renewable energy and the urgent need for environmental protection, new energy electric vehicles using rechargeable batteries as a power source have been developing rapidly. At present, fast charging of a traction battery can be implemented by alternate charging and discharging. During discharging, an energy storage unit can be provided to receive electrical energy released by the traction battery. However, restricted by factors such as capacity of the energy storage unit, charging efficiency of the traction battery cannot be further improved. The document KR 101 969 301 B1 is an example of background art.

### SUMMARY

Embodiments of this application provide a charging method, charging apparatus, and charging system for traction battery, which can improve charging efficiency.

According to a first aspect, this application provides a charging method for traction battery, applied to a charging apparatus. The charging apparatus includes N energy storage units connected in series, where each energy storage unit includes an energy storage battery and a first DC/DC converter connected to the energy storage battery. Each charging period of the charging apparatus includes a stage in which the traction battery is charged and a stage in which the traction battery discharges to the N energy storage units, N being a positive integer greater than 1. The charging method includes: in the discharge stage, obtaining a current voltage of the energy storage battery in each energy storage unit; determining, based on the current voltage of the energy storage battery in each energy storage unit, a first voltage output by the first DC/DC converter in each energy storage unit, where the first voltage output by the first DC/DC converter in each energy storage unit is inversely proportional to the current voltage of the energy storage battery in each energy storage unit; and sending a first control signal to the first DC/DC converter in each energy storage unit, where the first control signal is used to control the first DC/DC converter to output the first voltage, so as to cause the energy storage battery in each energy storage unit to receive, at the first voltage via the first DC/DC converter in each energy storage unit, electrical energy released by the traction battery.

In the embodiments of this application, fast charging of the traction battery is implemented by alternate charging and discharging. Because the charging apparatus includes a plurality of energy storage units connected in series, and each energy storage unit includes an energy storage battery and a first DC/DC converter connected to the energy storage battery, electrical energy discharged by the traction battery to each energy storage unit can be adjusted by controlling output voltage of each first DC/DC converter, for example, adjusting output voltage of the first DC/DC converter in each energy storage unit to be inversely proportional to a current voltage of the energy storage battery. This can make electrical energy that each energy storage unit withstands match its current electrical energy, avoiding energy mismatch between the energy storage units. In this way, capacity of the energy storage units is fully used, enabling the energy storage units to more effectively receive the electrical energy released by the traction battery, thereby improving charging efficiency of the traction battery.

In a possible embodiment, the charging method further includes: in the charge stage, obtaining a current voltage of the energy storage battery in each energy storage unit; determining, based on the current voltage of the energy storage battery in each energy storage unit, a second voltage output by the first DC/DC converter in each energy storage unit, where the second voltage output by the first DC/DC converter in each energy storage unit is proportional to the current voltage of the energy storage battery in the energy storage unit; and sending a second control signal to the first DC/DC converter in each energy storage unit, where the second control signal is used to control the first DC/DC converter to output the second voltage, so as to cause the energy storage battery in each energy storage unit to charge the traction battery at the second voltage via the first DC/DC converter in each energy storage unit.

In this embodiment, in the stage in which the traction battery is charged, output voltage of the first DC/DC converter in each energy storage unit can also be adjusted to be proportional to the current voltage of the energy storage battery, so that electrical energy provided by each energy storage unit better matches current electrical energy of each energy storage unit, further implementing full use of capacity of the energy storage batteries, and improving the charging efficiency of the traction battery.

In a possible embodiment, the charging apparatus further includes a separating unit. The separating unit is connected between the N energy storage units and the traction battery, where the separating unit includes M second DC/DC converters and a switch module connected between the M second DC/DC converters, M being a positive integer greater than or equal to 2.

In a possible embodiment, the charging method further includes: controlling the switch module to make the M second DC/DC converters connected in series, so that voltage output by the separating unit to the traction battery is M times voltage output by the N energy storage units; or controlling the switch module to make the M second DC/DC converters connected in parallel, so that current output by the separating unit to the traction battery is M times current output by the N energy storage units.

The foregoing embodiment further provides a separating unit connected between the N energy storage units and the traction battery, where the separating unit includes M second DC/DC converters and a switch module connected between the M second DC/DC converters. The switch module can be controlled to change a connection manner between the M second DC/DC converters, thereby implementing adjustment of output side voltage of the separating unit. When the switch module of the separating unit is controlled to make the M second DC/DC converters connected in series, the charging apparatus can charge the traction battery at a high voltage; and when the switch module of the separating unit is controlled to make the M second DC/DC converters connected in parallel, the charging apparatus can charge the traction battery at a high current.

In a possible embodiment, the charging apparatus further includes an AC/DC converter, where the AC/DC converter is connected between the traction battery and an alternating current power supply. The charging method further includes: sending a third control signal to the AC/DC converter, where the third control signal is used to control voltage output by the AC/DC converter to be equal to charging voltage of the traction battery, so as to cause the alternating current power supply to charge the traction battery at the charging voltage via the AC/DC converter.

In a possible embodiment, the charging method further includes: sending a fourth control signal to the AC/DC converter, where the fourth control signal is used to control voltage output by the AC/DC converter to be equal to discharging voltage of the traction battery, so as to cause the traction battery to discharge to the alternating current power supply at the discharging voltage via the AC/DC converter.

In the foregoing embodiment, the AC/DC converter is further connected between the traction battery and the alternating current power supply. The AC/DC converter can not only convert alternating current output by the alternating current power supply into stable direct current so as to charge the traction battery, but also convert direct current output by the traction battery into alternating current in the discharge stage of the traction battery, so as to release electrical energy of the traction battery to the alternating current power supply, implementing discharging of the traction battery to the energy storage unit and the alternating current power supply simultaneously. This reduces time of the discharge stage of the traction battery, and further improves the charging efficiency.

According to a second aspect, this application provides a charging apparatus for traction battery. The charging apparatus includes N energy storage units connected in series and a control module, where each energy storage unit includes an energy storage battery and a first DC/DC converter connected to the energy storage battery. Each charging period of the charging apparatus includes a stage in which the traction battery is charged and a stage in which the traction battery discharges to the N energy storage units, N being a positive integer greater than 1. The control module is configured to: in the discharge stage, obtain a current voltage of the energy storage battery in each energy storage unit; determine, based on the current voltage of the energy storage battery in each energy storage unit, a first voltage output by the first DC/DC converter in each energy storage unit, where the first voltage output by the first DC/DC converter in each energy storage unit is inversely proportional to the current voltage of the energy storage battery in each energy storage unit; and send a first control signal to the first DC/DC converter in each energy storage unit, where the first control signal is used to control the first DC/DC converter to output the first voltage, so as to cause the energy storage battery in each energy storage unit to receive, at the first voltage via the first DC/DC converter in each energy storage unit, electrical energy released by the traction battery.

The charging apparatus in the embodiment of this application implements fast charging of the traction battery by alternate charging and discharging. Because the charging apparatus includes a plurality of energy storage units connected in series, and each energy storage unit includes an energy storage battery and a first DC/DC converter connected to the energy storage battery, electrical energy discharged by the traction battery to each energy storage unit can be adjusted by controlling output voltage of each first DC/DC converter, for example, adjusting output voltage of the first DC/DC converter in each energy storage unit to be inversely proportional to a current voltage of the energy storage battery. This can make electrical energy that each energy storage unit withstands match its current electrical energy, avoiding energy mismatch between the energy storage units. In this way, capacity of the energy storage units is fully used, enabling the energy storage units to more effectively receive the electrical energy released by the traction battery, thereby improving the charging efficiency of the traction battery.

In a possible embodiment, the control module is further configured to: in the charge stage, obtain a current voltage of the energy storage battery in each energy storage unit; determine, based on the current voltage of the energy storage battery in each energy storage unit, a second voltage output by the first DC/DC converter in each energy storage unit, where the second voltage output by the first DC/DC converter in each energy storage unit is proportional to the current voltage of the energy storage battery in each energy storage unit; and send a second control signal to the first DC/DC converter in each energy storage unit, where the second control signal is used to control the first DC/DC converter to output the second voltage, so as to cause the energy storage battery in each energy storage unit to charge the traction battery at the second voltage via the first DC/DC converter in each energy storage unit.

In this embodiment, in the stage in which the traction battery is charged, output voltage of the first DC/DC converter in each energy storage unit can also be adjusted to be proportional to the current voltage of the energy storage battery, so that electrical energy provided by each energy storage unit better matches current electrical energy of each energy storage unit, further implementing full use of capacity of the energy storage batteries, and improving the charging efficiency of the traction battery.

In a possible embodiment, the charging apparatus further includes a separating unit, where the separating unit is connected between the N energy storage units and the traction battery. The separating unit includes M second DC/DC converters and a switch module connected between the M second DC/DC converters, M being a positive integer greater than or equal to 2. The control module is further configured to: control the switch module to make the M second DC/DC converters connected in series, so that voltage output by the separating unit to the traction battery is M times voltage output by the N energy storage units; or control the switch module to make the M second DC/DC converters connected in parallel, so that current output by the separating unit to the traction battery is M times current output by the N energy storage units.

The foregoing embodiment provides a separating unit connected between the N energy storage units and the traction battery, where the separating unit includes M second DC/DC converters and a switch module connected between the M second DC/DC converters. The switch module can be controlled to change a connection manner between the M second DC/DC converters, thereby implementing adjustment of output side voltage of the separating unit. When the switch module of the separating unit is controlled to make the M second DC/DC converters connected in series, the traction battery can be charged at a high voltage; and when the switch module of the separating unit is controlled to make the M second DC/DC converters connected in parallel, the traction battery can be charged at a high current.

In a possible embodiment, the charging apparatus further includes an AC/DC converter, where the AC/DC converter is connected between the traction battery and an alternating current power supply. The control module is further configured to send a third control signal to the AC/DC converter, where the third control signal is used to control voltage output by the AC/DC converter to be equal to charging voltage of the traction battery, so as to cause the alternating current power supply to charge the traction battery at the charging voltage via the AC/DC converter.

In a possible embodiment, the control module is further configured to send a fourth control signal to the AC/DC converter, where the fourth control signal is used to control voltage output by the AC/DC converter to be equal to discharging voltage of the traction battery, so as to cause the traction battery to discharge to the alternating current power supply at the discharging voltage via the AC/DC converter.

In the foregoing embodiment, the AC/DC converter is further connected between the traction battery and the alternating current power supply. The AC/DC converter can not only convert alternating current output by the alternating current power supply into stable direct current so as to charge the traction battery, but also convert direct current output by the traction battery into alternating current in the discharge stage of the traction battery, so as to release electrical energy of the traction battery to the alternating current power supply, implementing discharging of the traction battery to the energy storage unit and the alternating current power supply simultaneously. This reduces time of the discharge stage of the traction battery, and further improves the charging efficiency.

According to a third aspect, this application provides an EMS, including a processor, where the processor is configured to perform the method in the first aspect and any one of the possible embodiments of the first aspect.

According to a fourth aspect, an embodiment of this application provides a charging system, including a traction battery and the charging apparatus in the second aspect or any one of the possible embodiments of the second aspect, where the charging apparatus is configured to charge the traction battery, and each charging period includes a stage in which the traction battery is charged and a stage in which the traction battery discharges.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a charging system according to an embodiment of this application.
FIG. 2 is a schematic diagram of a charging period according to an embodiment of this application.
FIG. 3 is a schematic structural diagram of a charging apparatus according to an embodiment of this application.
FIG. 4 is a schematic flowchart of a charging method according to an embodiment of this application.
FIG. 5 is a schematic structural diagram of a charging apparatus according to another embodiment of this application.
FIG. 6 is a schematic structural diagram of a charging apparatus according to still another embodiment of this application.
FIG. 7 is a flowchart of a specific implementation based on the charging method shown in FIG. 4.

### DESCRIPTION OF EMBODIMENTS

The following further describes implementations of this application in detail with reference to accompanying drawings and embodiments. The detailed description of the following embodiments and the accompanying drawings are used to exemplarily illustrate the principle of this application, but cannot be used to limit the scope of this application, that is, this application is not limited to the described embodiments.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", "third", and the like are merely for a purpose of description, and shall not be understood as any indication or implication of relative importance.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the new energy field, a traction battery may be used as a major traction source for an electric apparatus such as a vehicle, a ship, or a spacecraft, and an energy storage battery may be a charging source for the electric apparatus. The importance of the traction battery and the energy storage battery is taken for granted. As examples rather than limitations, in some application scenarios, the traction battery may be a battery in an electric apparatus, and the energy storage battery may be a battery in a charging apparatus.

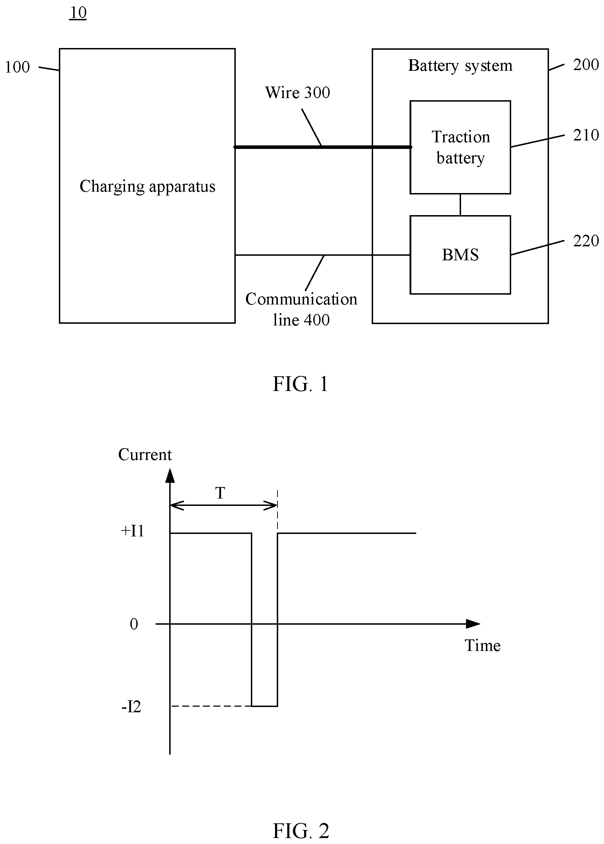

FIG. 1 is a schematic structural diagram of a charging system to which embodiments of this application are applicable.

As shown in FIG. 1, the charging system 10 may include a charging apparatus 100 and a battery system 200. Optionally, the battery system 200 may be a battery system in an electric vehicle (including a battery electric vehicle and a plug-in hybrid electric vehicle) or a battery system in another application scenario.

Optionally, the battery system 200 may be provided with at least one battery pack (battery pack), and the at least one battery pack as a whole may be collectively referred to as a traction battery 210. In terms of category, the traction battery 210 may be a battery of any type, including but not limited to a lithium-ion battery, a lithium metal battery, a lithium-sulfur battery, a lead-acid battery, a nickel-cadmium battery, a nickel-metal hydride battery, or a lithium-air battery. In terms of scale, the traction battery 210 in the embodiments of this application may be a battery cell (cell), or may be a battery module or a battery pack, where the battery module or battery pack may be formed by a plurality of batteries connected in series or parallel. In the embodiments of this application, a specific type and scale of the traction battery 210 are not specifically limited.

In addition, in order to intelligently manage and maintain the traction battery 210 to prevent overcharge and overdischarge of the battery and extend service life of the battery, the battery system 200 is generally further provided with a battery management system (battery management system, BMS) 220 for monitoring a state of the traction battery 210. Optionally, the BMS 220 may be integrated with the traction battery 210 in a same device or apparatus, or the BMS 220 may be disposed outside the traction battery 210 as a separate device/apparatus.

Specifically, the charging apparatus 100 is an apparatus that supplements electrical energy to the traction battery 210 in the battery system 200.

Optionally, the charging apparatus 100 in the embodiments of this application may be a common charging pile, a super charging pile, a charging pile supporting vehicle to grid (vehicle to grid, V2G) mode, a charging apparatus or device capable of charging batteries, or the like. A specific type and specific application scenario of the charging apparatus 100 are not limited in the embodiments of this application.

Optionally, as shown in FIG. 1, the charging apparatus 100 may be connected to the traction battery 210 through a wire 300 and connected to the BMS 220 through a communication line 400. The communication line 400 is used for information exchange between the charging apparatus 100 and the BMS 220.

In an example, the communication line 400 includes but is not limited to a controller area network (controller area network, CAN) communication bus or a daisy chain (daisy chain) communication bus.

Optionally, in addition to communicating with the BMS 220 through the communication line 400, the charging apparatus 100 can also communicate with the BMS 220 through a wireless network. A communication type between the charging apparatus 100 and the BMS 220 is not limited in the embodiments of this application.

When a conventional charging method is used for continuously charging the traction battery 210, subject to accumulation of lithium ions at a negative electrode of the battery during the continuous charging process, charging current is also limited. As a result, continuous high current cannot be used for rapid charging of the battery. To implement fast charging of the traction battery 210, in the embodiments of this application, alternate charging and discharging is implemented for the traction battery 210 to fast charge the traction battery 210.

For example, as shown in FIG. 2, one charging period T includes a stage in which the traction battery 210 is charged and a stage in which the traction battery 210 discharges. In the stage in which the traction battery 210 is charged, a charging current is +I1; and in the stage in which the traction battery 210 discharges, a charging current is -I2. After the traction battery 210 is charged at a high current, the traction battery 210 discharges so as to release the lithium ions accumulated at the negative electrode of the traction battery 210 during charging, avoiding lithium precipitation, heating, and the like of the traction battery 210. Therefore, the traction battery 210 can be charged at a large current again, thereby implementing fast charging of the traction battery 210.

The charging apparatus 100 in the embodiments of this application is provided with an energy storage unit, where the energy storage unit is configured to receive electrical energy released by the traction battery 210 in the discharge stage. The energy storage unit is, for example, an energy storage battery, where capacity of the energy storage battery directly affects the electrical energy that the traction battery 210 can release. To increase the capacity of the energy storage battery, the energy storage battery may include a large number of battery cells. When the large number of battery cells are connected in series, if the battery cells have poor consistency, failure of an individual battery cell may lead to failure of the entire energy storage battery, which directly affects charging of the traction battery 210. To improve reliability of charging, these battery cells may be disposed in a plurality of energy storage batteries, that is, a plurality of energy storage batteries are used to simultaneously receive the electrical energy released by the traction battery 210. In this way, when a battery cell in one energy storage battery fails, in a specified manner, such as bypassing this energy storage battery, it is possible to keep the charging of the traction battery 210 not affected, thereby improving the reliability of charging.

The plurality of energy storage batteries may be connected in series. When the traction battery 210 simultaneously discharges to the energy storage batteries connected in series, the possible difference in electrical energy of the plurality of energy storage batteries cause voltage between two ends of each energy storage battery to vary, and currents in the plurality of energy storage batteries connected in series are equal, so electrical energy released by the traction battery 210 to the plurality of energy storage batteries varies. For example, an energy storage battery with small state of charge (State of Charge, SOC) has a low voltage between its two ends, therefore within a period of time, the traction battery 210 releases less electrical energy to this energy storage battery; and an energy storage battery with large SOC has a high voltage between its two ends, therefore within the same period of time, the traction battery 210 releases more electrical energy to this energy storage battery. In this case, energy mismatch may occur between the energy storage batteries. The energy storage battery with small SOC receives less electrical energy; and the energy storage battery with large SOC receives more electrical energy, and can easily be fully charged. Because the plurality of energy storage batteries follow the bucket effect, when one of the energy storage batteries is fully charged, charging of the traction battery 210 is terminated to ensure safety. Therefore, the energy mismatch between the energy storage batteries make the capacity of the energy storage units unable to be fully utilized, so that the charging efficiency of the traction battery 210 cannot be further improved.

In view of this, the embodiments of this application propose a charging scheme for traction battery, in which a first DC/DC converter is provided to control charging voltage and discharging voltage of each energy storage battery so that electrical energy received and released by each energy storage battery matches its current capacity, so as to avoid energy mismatch between the energy storage batteries, thereby improving the charging efficiency of the traction battery.

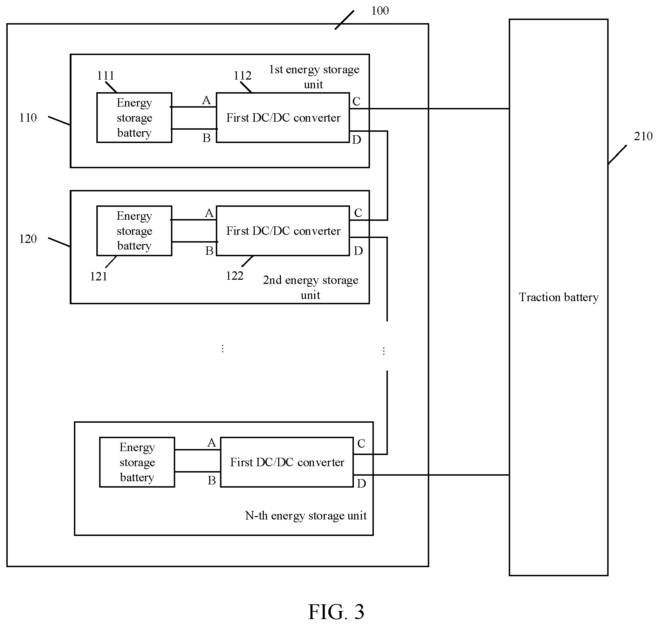

FIG. 3 is a schematic structural diagram of a charging apparatus 100 according to an embodiment of this application. The charging apparatus 100 may be a charging pile or a charger, or may be another type of fixed or mobile charging apparatus. This is no limit herein.

The charging apparatus 100 may include N energy storage units, for example, an energy storage unit 110 and an energy storage unit 120, N being a positive integer greater than 1. Each charging period of the charging apparatus 100 includes a stage in which a traction battery 210 is charged and a stage in which the traction battery 210 discharges to the N energy storage units.

As shown in FIG. 3, each energy storage unit includes an energy storage battery and a first DC/DC converter connected to the energy storage battery. For example, the energy storage unit 110 includes an energy storage battery 111 and a first DC/DC converter 112 connected to the energy storage battery 111, and the energy storage unit 120 includes an energy storage battery 121 and a first DC/DC converter 122 connected to the energy storage battery 121.

Specifically, the energy storage battery in each energy storage unit may be connected in parallel on a first DC side of the first DC/DC converter in this energy storage unit, namely, a side on which a port A and a port B are located, and two electrodes of the energy storage battery may be connected to the port A and port B respectively. Second DC sides of the first DC/DC converters in the energy storage units are connected in series, that is, sides on which a port C and a port D are located are connected in series. For example, as shown in FIG. 3, the energy storage battery 111 in the energy storage unit 110 is connected in parallel on a first DC side of the first DC/DC converter 112, namely, a side of the first DC/DC converter 112 with a port A and a port B, and the energy storage battery 121 in the energy storage unit 120 is connected in parallel on a first DC side of the first DC/DC converter 122, namely, a side of the first DC/DC converter 122 with a port A and a port B. In addition, a second DC side of the first DC/DC converter 112 and a second DC side of the first DC/DC converter 122 are connected in series.

It can be seen from FIG. 3 that the first DC side of the first DC/DC converter is a side, of the first DC/DC converter, that is used to connect to the energy storage battery, and the second DC side of the first DC/DC converter is a side, of the first DC/DC converter, that is used to connect to the traction battery 210. It should be noted that, when the energy storage battery charges the traction battery 210, the first DC side is an input side of the first DC/DC converter, and the second DC side is an output side of the first DC/DC converter; and when the traction battery 210 discharges to the energy storage battery, the first DC side is the output side of the first DC/DC converter, and the second DC side is the input side of the first DC/DC converter.

Optionally, the first DC/DC converter may be a voltage-type converter that converts input voltage and outputs effective fixed voltage, for example, may be configured as a buck-boost DC/DC converter.

Optionally, the N energy storage units may be N single electric boxes, and the energy storage batteries in the N energy storage units may be battery modules or battery packs, where the battery module or battery pack may be formed by a plurality of battery cells connected in series or in parallel.

Further, the charging apparatus 100 may further include a control module 160. The control module 160 may be connected to the N energy storage units and is configured to control the first DC/DC converters in the N energy storage units, so that the traction battery 210 discharges to the energy storage units via the first DC/DC converters or the energy storage units charge the traction battery 210 via the first DC/DC converters. The control module 160 may further be connected to a BMS 220 of the traction battery 210 through a communication line 400, so as to implement information exchange between the charging apparatus 100 and the BMS 220.

The control module 160 may be, for example, a charging pile, or an energy management system (energy management system, EMS) in a charger. Further, the control module 160 may further include an auxiliary power supply system.

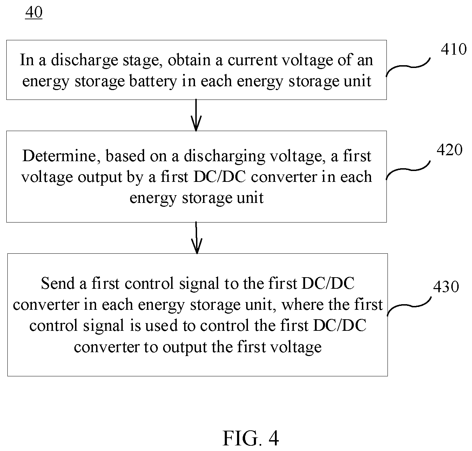

Optionally, FIG. 4 shows a charging method 40 according to an embodiment of this application, used for charging the traction battery 210. The method 40 may be performed by the foregoing control module 160, and may specifically include some or all of the following steps.

Step 410. In a discharge stage, obtain a current voltage of the energy storage battery in each energy storage unit.

Step 420. Determine, based on a discharging voltage of the traction battery 210, a first voltage output by the first DC/DC converter in each energy storage unit.

The first voltage output by the first DC/DC converter in each energy storage unit is inversely proportional to the current voltage of the energy storage battery in each energy storage unit.

Step 430. Send a first control signal to the first DC/DC converter in each energy storage unit. The first control signal is used to control the first DC/DC converter to output the first voltage, so as to cause the energy storage battery in each energy storage unit to receive, at the first voltage via the first DC/DC converter in each energy storage unit, electrical energy released by the traction battery 210.

In this embodiment of this application, fast charging of the traction battery 210 is implemented by alternate charging and discharging. Because the charging apparatus 100 includes N energy storage units connected in series, and each energy storage unit includes an energy storage battery and a first DC/DC converter connected to the energy storage battery, electrical energy discharged by the traction battery 210 to each energy storage unit can be adjusted by controlling the output voltage of each first DC/DC converter. When output voltage of the first DC/DC converter in each energy storage unit is adjusted to be inversely proportional to a current voltage of the energy storage battery, electrical energy that each energy storage unit withstands can match its current electrical energy, avoiding energy mismatch between the energy storage units. This implements full use of capacity of the energy storage units, and enables the energy storage units to more effectively receive the electrical energy released by the traction battery, thereby improving the charging efficiency of the traction battery.

Specifically, when the traction battery 210 discharges to the N energy storage units, the control module 160 may receive discharging voltage from the BMS 220, where the discharging voltage is the voltage required for the traction battery 210 to discharge. The control module 160 may obtain current voltages of the energy storage batteries in all energy storage units simultaneously, so as to adjust, based on the discharging voltage of the traction battery 210 and the current voltage of each energy storage battery, the first voltage output by the first DC/DC converter in each energy storage unit, to make the first voltage inversely proportional to the current voltage of the energy storage battery in each energy storage unit. During discharging, a sum of voltages of the N energy storage units is equal to the discharging voltage of the traction battery 210.

For example, assuming that current electrical energy of the energy storage battery 111 in the energy storage unit 110 is low, that is, SOC is small, voltage between two ends of the energy storage battery 111 is low; and when current electrical energy of the energy storage battery 121 in the energy storage unit 120 is high, that is, SOC is large, voltage between two ends of the energy storage battery 121 is high. Because the energy storage unit 110 and the energy storage unit 120 are connected in series, currents are equal when the traction battery 210 discharges to the energy storage unit 110 and the energy storage unit 120. When the traction battery 210 discharges to the energy storage unit, higher voltage and current of the energy storage unit lead to larger electrical energy received by the energy storage unit from the traction battery 210. This results in the traction battery 210 releasing less electrical energy to the energy storage battery 111 with smaller SOC and releasing more electrical energy to the energy storage battery 121 with larger SOC, leading to energy mismatch between the two energy storage batteries. Because the energy storage battery 121 with larger SOC is fully charged soon, charging of the traction battery 210 will be terminated to ensure safety.

In this case, when a current voltage of the energy storage battery 111 is low, the control module 160 controls the first DC/DC converter 112 that is connected to the energy storage battery 111 to output a higher first voltage to the energy storage battery 111; and correspondingly, when the current voltage of the energy storage battery 121 is high, the control module 160 controls the first DC/DC converter 122 that is connected to the energy storage battery 121 to output a lower first voltage to the energy storage battery 121. In this way, electrical energy received by the energy storage unit can match its current electrical energy, the energy storage battery 111 with a lower current voltage or less electrical energy can receive more electrical energy from the traction battery 210, and the energy storage battery 121 with a higher current voltage or more electrical energy receives less electrical energy from the traction battery 210, so that energy between the energy storage units is relatively balanced after discharge of the traction battery 210, thereby implementing full use of capacity of the energy storage units and improving charging efficiency.

The above describes how the control module 160 controls the first DC/DC converter during a stage in which the traction battery 210 discharges to the N energy storage units. Correspondingly, the control module 160 may also control the first DC/DC converter during a stage in which the traction battery 210 is charged by the N energy storage units, so as to make the energy of the N energy storage units more balanced.

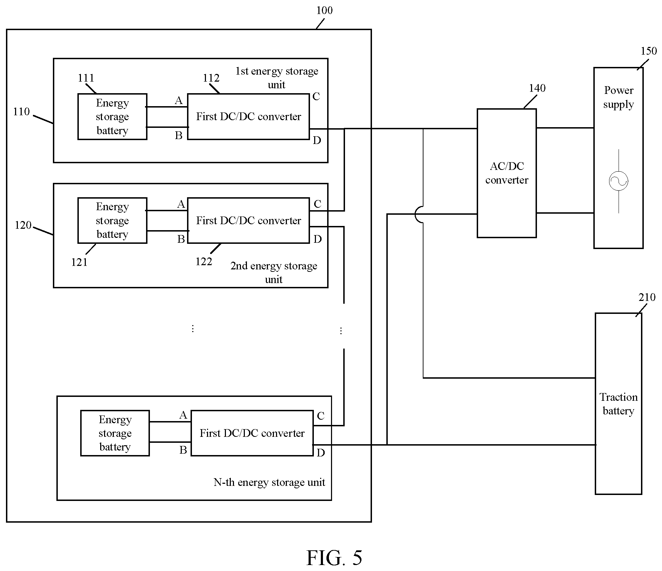

It should be understood that, in this embodiment of this application, the traction battery 210 may be charged by an alternating current power supply 150 alone, namely, a power grid, or the traction battery 210 may be charged by the N energy storage units and the alternating current power supply 150 together. Optionally, as shown in FIG. 5, the charging apparatus 100 further includes an AC/DC converter 140, where the AC/DC converter 140 is connected between the traction battery 210 and the alternating current power supply 150. When the traction battery 210 is charged, alternating current output by the alternating current power supply 150 is converted into stable direct current via the AC/DC converter 140, so as to charge the traction battery 210.

Specifically, when the alternating current power supply 150 charges the traction battery 210, the control module 160 may send a third control signal to the AC/DC converter 140, where the third control signal is used to control voltage output by the AC/DC converter 140 to be equal to charging voltage of the traction battery 210, so as to cause the alternating current power supply 150 to charge the traction battery 210 at the charging voltage via the AC/DC converter 140.

When the N energy storage units charges the traction battery 210, optionally, the method 40 may further include:
in a charge stage, obtaining a current voltage of each energy storage battery;
determining, based on the current voltage of each energy storage battery, a second voltage output by the first DC/DC converter in each energy storage unit, where the second voltage output by the first DC/DC converter in each energy storage unit is proportional to the current voltage of the energy storage battery in each energy storage unit; and
sending a second control signal to the first DC/DC converter in each energy storage unit, where the second control signal is used to control the first DC/DC converter to output the second voltage, so as to cause the energy storage battery in each energy storage unit to charge the traction battery 210 at the second voltage via the first DC/DC converter in each energy storage unit.

In this way, similarly, in a stage in which the traction battery 210 is charged, electrical energy provided by each energy storage unit to the traction battery 210 can alternatively be adjusted by controlling output voltage of each first DC/DC converter, for example, adjusting output voltage of the first DC/DC converter in each energy storage unit to be proportional to the current voltage of the energy storage battery, so that the energy storage battery with larger SOC transfers more electrical energy to the traction battery 210 and the energy storage battery with smaller SOC transfers less electrical energy to the traction battery 210. This can make electrical energy provided by each energy storage unit better match its current electrical energy, and implement full use of capacity of the energy storage batteries, thereby improving the charging efficiency of the traction battery.

Specifically, when the N energy storage units charge the traction battery 210, the control module 160 can receive charging voltage from the BMS 220, where this charging voltage is the voltage required for charging the traction battery 210. In addition, the control module 160 may obtain a current voltage of each energy storage unit and adjust, based on the charging voltage of the traction battery 210 and the current voltage of the energy storage battery in each energy storage unit, the second voltage output by the first DC/DC converter in each energy storage unit to make the second voltage proportional to the current voltage of the energy storage battery in each energy storage unit. During charging, a sum of voltages of the N energy storage units is equal to the charging voltage of the traction battery 210.

In this embodiment, because the N energy storage units and the alternating current power supply 150 can charge the traction battery 210 together, the charging efficiency is further improved.

Optionally, if the alternating current power supply 150 can be used to receive electrical energy, that is, grid-connected discharge of the power grid is allowed, the traction battery 210 can simultaneously discharge to the N energy storage units and the alternating current power supply 150. When the traction battery 210 discharges to the alternating current power supply 150, the control module 160 may send a fourth control signal to the AC/DC converter 140, where the fourth control signal is used to control discharging voltage output by the AC/DC converter 140 to be equal to discharging voltage required by the traction battery 210, so as to cause the traction battery 210 to discharge to the alternating current power supply 150 at the discharging voltage via the AC/DC converter 140.

If the alternating current power supply 150 cannot be used to receive electrical energy, that is, grid-connected discharge of the power grid is not allowed, the traction battery 210 can discharge only to the N energy storage units.

It can be learned that when the AC/DC converter 140 is further connected between the traction battery 210 and the alternating current power supply 150, the AC/DC converter 140 can not only convert alternating current output by the alternating current power supply 150 into stable direct current for the alternating current power supply 150 to charge the traction battery 210, but also convert direct current output by the traction battery 210 into alternating current in the discharge stage of the traction battery 210, so as to release electrical energy of the traction battery 210 to the alternating current power supply 150, implementing discharging of the traction battery 210 to the N energy storage units and the alternating current power supply 150 simultaneously. This reduces time of the discharge stage of the traction battery 210, and further improves the charging efficiency.

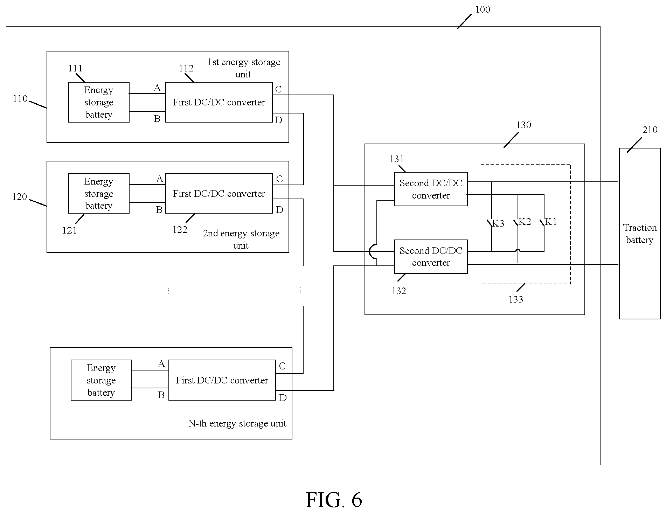

Optionally, as shown in FIG. 6, the charging apparatus 100 may further include a separating unit 130.

Specifically, the separating unit 130 is connected between the N energy storage units and the traction battery 210, and the separating unit 130 includes M second DC/DC converters and a switch module 133 connected between the M second DC/DC converters, M being a positive integer greater than or equal to 2.

The control module 160 can control the switch module 133 to make the M second DC/DC converters connected in series. In this case, voltage output by the separating unit 130 to the traction battery 210 is M times voltage output by the N energy storage units.

The control module 160 can also control the switch module 133 to make the M second DC/DC converters connected in parallel. In this case, current output by the separating unit 130 to the traction battery 210 is M times current output by the N energy storage units.

Taking M=2 as an example, as shown in FIG. 6, the separating unit 130 includes two second DC/DC converters: a second DC/DC converter 131 and a second DC/DC converter 132. When the N energy storage units charges the traction battery 210, sides of the second DC/DC converter 131 and the second DC/DC converter 132 that are connected to the N energy storage units serve as input terminals, and sides of the second DC/DC converter 131 and the second DC/DC converter 132 that are connected to the traction battery 210 serve as output terminals. The input terminal of the second DC/DC converter 131 and the input terminal of the second DC/DC converter 132 are connected in parallel, and the switch module 133 is connected between the output terminal of the second DC/DC converter 131 and the output terminal of the second DC/DC converter 132.

In an example, as shown in FIG. 6, the switch module 133 may include a switch K1, a switch K2, and a switch K3. When the energy storage units charge the traction battery 210, the control module 160 may control the switch K1 in the switch module 133 to turn on, so as to make the output terminals of the second DC/DC converter 131 and the second DC/DC converter 132 connected in series. In this case, voltage output by the separating unit 130 to the traction battery 210 is twice total voltage output by the N energy storage units.

When the energy storage units charge the traction battery 210, the control module 160 may control the switch K2 and switch K3 in the switch module 133 to make the output terminals of the second DC/DC converter 131 and the second DC/DC converter 132 connected in parallel. In this way, current output by the separating unit 130 to the traction battery 210 is twice current output by the N energy storage units.

Therefore, because the separating unit 130 is connected between the N energy storage units and the traction battery 210, and the separating unit 130 includes the M second DC/DC converters and the switch module 133 connected between the M second DC/DC converters, the series or parallel connection relationship of the M second DC/DC converters at the output terminals can be changed by controlling the switch module 133, thereby implementing adjustment of the voltage output by the separating unit 130 to the traction battery 210. When the switch module 133 of the separating unit 130 is controlled to make the M second DC/DC converters connected in series, the traction battery 210 can be charged at a high voltage; and when the switch module 133 of the separating unit 130 is controlled to make the M second DC/DC converters connected in parallel, currents output by the second DC/DC converters are added up, so that the traction battery 210 can be charged at a high current.

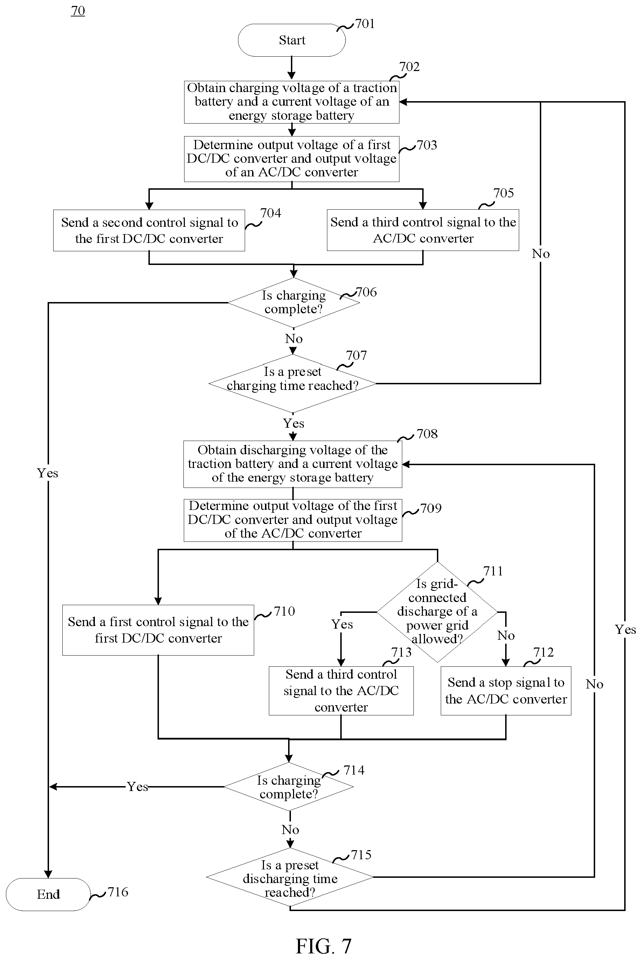

FIG. 7 is a schematic flowchart of a possible implementation based on the charging method shown in FIG. 4. Fast charging of the traction battery 210 can be implemented by periodic charging and discharging of the traction battery 210. As shown in FIG. 7, a method 70 may be performed by the foregoing control module 160, for example, an EMS. Taking the charging apparatus 100 shown in FIG. 5 as an example, the method 70 includes the following steps.

Step 701. Start charging the traction battery 210 after detecting that the charging apparatus 100 is successfully connected to a battery system 200.

Step 702. Obtain charging voltage of the traction battery 210 and measure a current voltage of the energy storage battery in each energy storage unit.

Step 703. Determine output voltage of the first DC/DC converter in each energy storage unit and output voltage of the AC/DC converter 140.

The output voltage of the AC/DC converter 140 is equal to charging voltage required for the traction battery 210. A second voltage output by the first DC/DC converter in each energy storage unit is proportional to the current voltage of the energy storage battery in each energy storage unit. In this way, the energy storage battery with larger SOC can transfer more electrical energy to the traction battery 210, and the energy storage battery with smaller SOC can transfer less electrical energy to the traction battery 210, avoiding energy mismatch between the energy storage batteries, and improving the charging efficiency.

Step 704. Send a second control signal to the first DC/DC converter in each energy storage unit.

The second control signal is used to control the first DC/DC converter to output the second voltage, so as to cause the energy storage battery in each energy storage unit to charge the traction battery 210 at the second voltage via the first DC/DC converter in each energy storage unit.

While Step 704 is being performed, in Step 705, a third control signal is sent to the AC/DC converter 140.

The third control signal is used to control voltage output by the AC/DC converter 140 to be equal to the charging voltage of the traction battery 210, so as to cause the alternating current power supply 150 to charge the traction battery 210 at the charging voltage.

Step 706. Determine whether charging is complete.

For example, when voltage of the traction battery 210 reaches a full-charge voltage, the control module 160 receives a charging stop message from the BMS 220. If the charging stop message is received, it is determined that charging is complete, the charging stops, and Step 716 is performed. If no charging stop message is received, it is determined that charging is not complete, and Step 707 is performed.

Step 707. Record a charging time and determine whether a preset charging time is reached.

The preset charging time is a time of the charge stage for charging the traction battery 210 in each charging period; and correspondingly, a preset discharging time is a time of the discharge stage for discharging of the traction battery 210 in each charging period. Through alternate charge stage and discharge stage, fast charging of the traction battery 210 is implemented.

When the preset charging time is not reached, the traction battery 210 continues to be charged based on the foregoing steps; and when the preset charging time is reached, the discharge stage of this charging period starts.

Step 708. Obtain discharging voltage of the traction battery 210 and measure a current voltage of the energy storage battery in each energy storage unit.

Step 709. Determine output voltage of the first DC/DC converter in each energy storage unit and output voltage of the AC/DC converter 140.

The output voltage of the AC/DC converter 140 is equal to discharging voltage of the traction battery 210. A first voltage output by the first DC/DC converter in each energy storage unit is inversely proportional to the current voltage of the energy storage battery in each energy storage unit. In this way, the energy storage battery with larger SOC can receive less electrical energy from the traction battery 210, and the energy storage battery with smaller SOC can receive more electrical energy from the traction battery 210, avoiding energy mismatch between the energy storage batteries, and improving the charging efficiency.

Step 710. Send a first control signal to the first DC/DC converter in each energy storage unit.

The first control signal is used to control the first DC/DC converter to output the first voltage, so as to cause the energy storage battery in each energy storage unit to receive, at the first voltage via the first DC/DC converter in each energy storage unit, electrical energy released by the traction battery 210.

While Step 710 is being performed, in Step 711, it is determined whether the traction battery 210 is allowed to discharge to the alternating current power supply 150.

If the traction battery 210 is not allowed to discharge to the alternating current power supply 150, Step 712 is performed; otherwise, Step 713 is performed.

Step 712. Send a stop signal to the AC/DC converter 140.

The stop signal is used to control the AC/DC converter 140 to turn off.

Step 713. Send a third control signal to the AC/DC converter 140.

The third control signal is used to control voltage output by the AC/DC converter 140 to be equal to the discharging voltage of the traction battery 210, so as to cause the alternating current power supply 150 to receive, at the discharging voltage, electrical energy released by the traction battery 210.

Step 714. Determine whether charging is complete.

For example, when voltage of the traction battery 210 reaches a full-charge voltage, the control module 160 receives a charging stop message from the BMS 220. If the charging stop message is received, it is determined that charging is complete, the charging stops, and Step 716 is performed. If no charging stop message is received, it is determined that charging is not complete, and Step 715 is performed.

Step 715. Record a charging time and determine whether a preset discharging time is reached.

The preset discharging time is a time of the discharge stage for discharging of the traction battery 210 in each charging period.

When the preset discharging time is not reached, the traction battery 210 continues to discharge to the N energy storage units based on the foregoing steps; and when the preset discharging time is reached, a charge stage of a next charging period starts.

Step 716. End charging.

It can be seen from FIG. 7 that the control module 160 can control electrical energy released or received by the energy storage battery in each energy storage unit by controlling output voltage of each first DC/DC converter in the charge stage and discharge stage, so as to avoid energy mismatch between the energy storage units, thereby implementing full use of capacity of the energy storage units and improving the charging efficiency.

An embodiment of this application further provides an EMS, including a processor, where the processor is configured to perform the charging method in the foregoing embodiments of this application.

An embodiment of this application further provides a charging system, characterized by including a traction battery 210 and the charging apparatus 100 described in any one of the foregoing embodiments. The charging apparatus 100 is configured to charge the traction battery 210, where each charging period includes a stage in which the traction battery 210 is charged and a stage in which the traction battery 210 discharges.

It should be understood that the specific examples in this specification are merely intended to help persons skilled in the art better understand the embodiments of this application, but not to limit the scope of the embodiments of this application.

It should be further understood that, in the embodiments of this application, an execution order of the processes shall be determined based on the functions and internal logic of the processes and shall not constitute any limitation on the implementation processes of the embodiments of this application.

It should be further understood that the implementations described in this specification may be implemented alone, or may be implemented in combination. This is not limited in the embodiments of this application.

This application is not limited to the specific embodiments disclosed in this specification, but includes all technical solutions falling within the scope of the claims.

## Claims

1. A charging method (40) for traction battery, applied to a charging apparatus, the charging apparatus comprises N energy storage units connected in series, each energy storage unit comprises an energy storage battery and a first DC/DC converter connected to the energy storage battery, and each charging period of the charging apparatus comprises a stage in which the traction battery is charged and a stage in which the traction battery discharges to the N energy storage units, N being a positive integer greater than 1; and
the charging method (40) being **characterised by** further comprising:
in the discharge stage, obtaining (410) a current voltage of the energy storage battery in each energy storage unit;
determining (420), based on the current voltage of the energy storage battery in each energy storage unit, a first voltage output by the first DC/DC converter in each energy storage unit, wherein the first voltage output by the first DC/DC converter in each energy storage unit is inversely proportional to the current voltage of the energy storage battery in each energy storage unit; and
sending (430) a first control signal to the first DC/DC converter in each energy storage unit, wherein the first control signal is used to control the first DC/DC converter to output the first voltage, so as to cause the energy storage battery in each energy storage unit to receive, at the first voltage via the first DC/DC converter in each energy storage unit, electrical energy released by the traction battery.

2. The charging method (40) according to claim 1, **characterized in that** the method further comprises:
in the charge stage, obtaining a current voltage of the energy storage battery in each energy storage unit;
determining, based on the current voltage of the energy storage battery in each energy storage unit, a second voltage output by the first DC/DC converter in each energy storage unit, wherein the second voltage output by the first DC/DC converter in each energy storage unit is proportional to the current voltage of the energy storage battery in each energy storage unit; and
sending a second control signal to the first DC/DC converter in each energy storage unit, wherein the second control signal is used to control the first DC/DC converter to output the second voltage, so as to cause the energy storage battery in each energy storage unit to charge the traction battery at the second voltage via the first DC/DC converter in each energy storage unit.

3. The charging method (40) according to claim 1 or 2, **characterized in that** the charging apparatus further comprises a separating unit, wherein the separating unit is connected between the N energy storage units and the traction battery, and the separating unit comprises M second DC/DC converters and a switch module connected between the M second DC/DC converters, M being a positive integer greater than or equal to 2; and
the charging method (40) further comprises:
controlling the switch module to make the M second DC/DC converters connected in series, so that voltage output by the separating unit to the traction battery is M times voltage output by the N energy storage units; or
controlling the switch module to make the M second DC/DC converters connected in parallel, so that current output by the separating unit to the traction battery is M times current output by the N energy storage units.

4. The charging method (40) according to any one of claims 1 to 3, **characterized in that** the charging apparatus further comprises an AC/DC converter, wherein the AC/DC converter is connected between the traction battery and an alternating current power supply; and
the charging method (40) further comprises:
sending a third control signal to the AC/DC converter, wherein the third control signal is used to control voltage output by the AC/DC converter to be equal to charging voltage of the traction battery, so as to cause the alternating current power supply to charge the traction battery at the charging voltage via the AC/DC converter.

5. The charging method (40) according to claim 4, **characterized in that** the charging method (40) further comprises:
sending a fourth control signal to the AC/DC converter, wherein the fourth control signal is used to control voltage output by the AC/DC converter to be equal to discharging voltage of the traction battery, so as to cause the traction battery to discharge to the alternating current power supply at the discharging voltage via the AC/DC converter.

6. A charging apparatus (100) for traction battery, the charging apparatus (100) comprises N energy storage units connected in series and a control module (160), wherein each energy storage unit comprises an energy storage battery and a first DC/DC converter connected to the energy storage battery, and each charging period of the charging apparatus (100) comprises a stage in which the traction battery (210) is configured to be charged and a stage in which the traction battery (210) is configured to discharge to the N energy storage units, N being a positive integer greater than 1; and
being **characterized in that** the control module (160) is configured to:
in the discharge stage, obtain a current voltage of the energy storage battery in each energy storage unit;
determine, based on the current voltage of the energy storage battery in each energy storage unit, a first voltage output by the first DC/DC converter in each energy storage unit, wherein the first voltage output by the first DC/DC converter in each energy storage unit is inversely proportional to the current voltage of the energy storage battery in each energy storage unit; and
send a first control signal to the first DC/DC converter in each energy storage unit, wherein the first control signal is used to control the first DC/DC converter to output the first voltage, so as to cause the energy storage battery in each energy storage unit to receive, at the first voltage via the first DC/DC converter in each energy storage unit, electrical energy released by the traction battery (210).

7. The charging apparatus (100) according to claim 6, **characterized in that** the control module (160) is further configured to:
in the charge stage, obtain a current voltage of the energy storage battery in each energy storage unit;
determine, based on the current voltage of the energy storage battery in each energy storage unit, a second voltage output by the first DC/DC converter in each energy storage unit, wherein the second voltage output by the first DC/DC converter in each energy storage unit is proportional to the current voltage of the energy storage battery in each energy storage unit; and
send a second control signal to the first DC/DC converter in each energy storage unit, wherein the second control signal is used to control the first DC/DC converter to output the second voltage, so as to cause the energy storage battery in each energy storage unit to charge the traction battery (210) at the second voltage via the first DC/DC converter in each energy storage unit.

8. The charging apparatus (100) according to claim 6 or 7, **characterized in that** the charging apparatus (100) further comprises a separating unit (130), wherein the separating unit (130) is connected between the N energy storage units and the traction battery (210), and the separating unit (130) comprises M second DC/DC converters and a switch module (133) connected between the M second DC/DC converters, M being a positive integer greater than or equal to 2; and
the control module (160) is further configured to:
control the switch module (133) to make the M second DC/DC converters connected in series, so that voltage output by the separating unit (130) to the traction battery (210) is M times total voltage output by the N energy storage units; or
control the switch module (133) to make the M second DC/DC converters connected in parallel, so that current output by the separating unit (130) to the traction battery (210) is equal to M times current output by the N energy storage units.

9. The charging apparatus (100) according to any one of claims 6 to 8, **characterized in that** the charging apparatus (100) further comprises an AC/DC converter (140), wherein the AC/DC converter (140) is connected between the traction battery (210) and an alternating current power supply (150); and
the control module (160) is further configured to: send a third control signal to the AC/DC converter (140), wherein the third control signal is used to control voltage output by the AC/DC converter (140) to be equal to charging voltage of the traction battery (210), so as to cause the alternating current power supply (150) to charge the traction battery (210) at the charging voltage via the AC/DC converter (140).

10. The charging apparatus (100) according to claim 9, **characterized in that** the control module (160) is further configured to:
send a fourth control signal to the AC/DC converter (140), wherein the fourth control signal is used to control voltage output by the AC/DC converter (140) to be equal to discharging voltage of the traction battery (210), so as to cause the traction battery (210) to discharge to the alternating current power supply (150) at the discharging voltage via the AC/DC converter (140).

11. An EMS, comprising a processor, wherein the processor is configured to perform the charging method (40) according to any one of claims 1 to 5.

12. A charging system (10), **characterized by** comprising:
a traction battery (210); and
the charging apparatus (100) according to any one of claims 6 to 10, wherein the charging apparatus (100) is configured to charge the traction battery (210), and each charging period comprises a stage in which the traction battery (210) is configured to be charged and a stage in which the traction battery (210) is configured to discharge.

## Patentansprüche

1. Ladeverfahren (40) für Traktionsbatterie, angewendet auf eine Ladevorrichtung,
wobei die Ladevorrichtung N Energiespeichereinheiten aufweist, die in Reihe verbunden sind, jede Energiespeichereinheit eine Energiespeicherbatterie und einen ersten DC/DC-Wandler, der mit der Energiespeicherbatterie verbunden ist, aufweist und jeder Ladezeitraum der Ladevorrichtung eine Phase, in welcher die Traktionsbatterie geladen wird, und eine Phase, in welcher die Traktionsbatterie sich in die N Energiespeichereinheiten entlädt, aufweist, wobei N eine positive Ganzzahl größer als 1 ist; und
das Ladeverfahren (40) **dadurch gekennzeichnet ist, dass** es ferner umfasst:
in der Entladephase, Erhalten (410) einer aktuellen Spannung der Energiespeicherbatterie in jeder Energiespeichereinheit;
Bestimmen (420), basierend auf der aktuellen Spannung der Energiespeicherbatterie in jeder Energiespeichereinheit, einer ersten Spannung, die durch den ersten DC/DC-Wandler in jeder Energiespeichereinheit ausgegeben wird, wobei die erste Spannung, die durch den ersten DC/DC-Wandler in jeder Energiespeichereinheit ausgegeben wird, umgekehrt proportional zu der aktuellen Spannung der Energiespeicherbatterie in jeder Energiespeichereinheit ist; und
Senden (430) eines ersten Steuerungssignals an den ersten DC/DC-Wandler in jeder Energiespeichereinheit, wobei das erste Steuerungssignal dazu verwendet wird, den ersten DC/DC-Wandler dazu zu steuern, die erste Spannung auszugeben, um zu bewirken, dass die Energiespeicherbatterie in jeder Energiespeichereinheit über den ersten DC/DC-Wandler in jeder Energiespeichereinheit bei der ersten Spannung elektrische Energie empfängt, die von der Traktionsbatterie freigesetzt wird.

2. Ladeverfahren (40) nach Anspruch 1, **dadurch gekennzeichnet, dass** das Verfahren ferner umfasst:
in der Ladephase, Erhalten einer aktuellen Spannung der Energiespeicherbatterie in jeder Energiespeichereinheit;
Bestimmen, basierend auf der aktuellen Spannung der Energiespeicherbatterie in jeder Energiespeichereinheit, einer zweiten Spannung, die von dem ersten DC/DC-Wandler in jeder Energiespeichereinheit ausgegeben wird, wobei die zweite Spannung, die von dem ersten DC/DC-Wandler in jeder Energiespeichereinheit ausgegeben wird, proportional zu der aktuellen Spannung der Energiespeicherbatterie in jeder Energiespeichereinheit ist; und
Senden eines zweiten Steuerungssignals an den ersten DC/DC-Wandler in jeder Energiespeichereinheit, wobei das zweite Steuerungssignal dazu verwendet wird, den ersten DC/DC-Wandler dazu zu steuern, die zweite Spannung auszugeben, um zu bewirken, dass die Energiespeicherbatterie in jeder Energiespeichereinheit die Traktionsbatterie über den ersten DC/DC-Wandler in jeder Energiespeichereinheit bei der zweiten Spannung lädt.

3. Ladeverfahren (40) nach Anspruch 1 oder 2, **dadurch gekennzeichnet, dass** die Ladevorrichtung ferner eine Trenneinheit aufweist, wobei die Trenneinheit zwischen den N Energiespeichereinheiten und der Traktionsbatterie verbunden ist und die Trenneinheit M zweite DC/DC-Wandler und ein Schaltmodul aufweist, das zwischen den M zweiten DC/DC-Wandlern verbunden ist, wobei M eine positive Ganzzahl größer als oder gleich 2 ist; und
das Ladeverfahren (40) ferner umfasst:
Steuern des Schaltmoduls, um zu bewirken, dass die M zweiten DC/DC-Wandler in Reihe verbunden sind, sodass eine Spannung, die von der Trenneinheit an die Traktionsbatterie ausgegeben wird, das M-fache der von den N Energiespeichereinheiten ausgegebenen Spannung ist; oder
Steuern des Schaltmoduls, um zu bewirken, dass die M zweiten DC/DC-Wandler parallel verbunden sind, sodass ein Strom, der von der Trenneinheit an die Traktionsbatterie ausgegeben wird, das M-fache des von den N Energiespeichereinheiten ausgegebenen Stroms ist.

4. Ladeverfahren (40) nach einem der Ansprüche 1 bis 3, **dadurch gekennzeichnet, dass** die Ladevorrichtung ferner einen AC/DC-Wandler aufweist, wobei der AC/DC-Wandler zwischen der Traktionsbatterie und einer Wechselstromversorgung verbunden ist; und
das Ladeverfahren (40) ferner umfasst:
Senden eines dritten Steuerungssignals an den AC/DC-Wandler, wobei das dritte Steuerungssignal dazu verwendet wird, zu steuern, dass die Spannung, die von dem AC/DC-Wandler ausgegeben wird, gleich der Ladespannung der Traktionsbatterie ist, um zu bewirken, dass die Wechselstromversorgung die Traktionsbatterie über den AC/DC-Wandler bei der Ladespannung lädt.

5. Ladeverfahren (40) nach Anspruch 4, **dadurch gekennzeichnet, dass** das Ladeverfahren (40) ferner umfasst:
Senden eines vierten Steuerungssignals an den AC/DC-Wandler, wobei das vierte Steuerungssignal dazu verwendet wird, zu steuern, dass die Spannung, die von dem AC/DC-Wandler ausgegeben wird, gleich der Entladespannung der Traktionsbatterie ist, um zu bewirken, dass sich die Traktionsbatterie über den AC/DC-Wandler bei der Entladespannung in die Wechselstromversorgung entlädt.

6. Ladevorrichtung (100) für Traktionsbatterie, wobei die Ladevorrichtung (100) N Energiespeichereinheiten, die in Reihe verbunden sind, und ein Steuerungsmodul (160) aufweist, wobei jede Energiespeichereinheit eine Energiespeicherbatterie und einen ersten DC/DC-Wandler aufweist, der mit der Energiespeicherbatterie verbunden ist, und jeder Ladezeitraum der Ladevorrichtung (100) eine Phase, in der die Traktionsbatterie dazu eingerichtet ist, geladen zu werden, und eine Phase, in der die Traktionsbatterie (210) dazu eingerichtet ist, sich in die N Energiespeichereinheiten zu entladen, aufweist, wobei N eine positive Ganzzahl größer als 1 ist; und
**dadurch gekennzeichnet, dass** das Steuerungsmodul (160) dazu eingerichtet ist:
in der Entladephase eine aktuelle Spannung der Energiespeicherbatterie in jeder Energiespeichereinheit zu erhalten;
basierend auf der aktuellen Spannung der Energiespeicherbatterie in jeder Energiespeichereinheit eine erste Spannung, die von dem ersten DC/DC-Wandler in jeder Energiespeichereinheit ausgegeben wird, zu bestimmen, wobei die erste Spannung, die von dem ersten DC/DC-Wandler in jeder Energiespeichereinheit ausgegeben wird, umgekehrt proportional zu der aktuellen Spannung der Energiespeicherbatterie in jeder Energiespeichereinheit ist; und
ein erstes Steuerungssignal an den ersten DC/DC-Wandler in jeder Energiespeichereinheit zu senden, wobei das erste Steuerungssignal dazu verwendet wird, den ersten DC/DC-Wandler dazu zu steuern, die erste Spannung auszugeben, sodass bewirkt wird, dass die Energiespeicherbatterie in jeder Energiespeichereinheit über den ersten DC/DC-Wandler in jeder Energiespeichereinheit bei der ersten Spannung elektrische Energie empfängt, die von der Traktionsbatterie (210) freigesetzt wird.

7. Ladevorrichtung (100) nach Anspruch 6, **dadurch gekennzeichnet, dass** das Steuerungsmodul (160) ferner dazu eingerichtet ist:
in der Ladephase eine aktuelle Spannung der Energiespeicherbatterie in jeder Energiespeichereinheit zu erhalten;
basierend auf der aktuellen Spannung der Energiespeicherbatterie in jeder Energiespeichereinheit eine zweite Spannung zu bestimmen, die von dem ersten DC/DC-Wandler in jeder Energiespeichereinheit ausgegeben wird, wobei die zweite Spannung, die von dem ersten DC/DC-Wandler in jeder Energiespeichereinheit ausgegeben wird, proportional zu der aktuellen Spannung der Energiespeicherbatterie in jeder Energiespeichereinheit ist; und
ein zweites Steuerungssignal an den ersten DC/DC-Wandler in jeder Energiespeichereinheit zu senden, wobei das zweite Steuerungssignal dazu verwendet wird, den ersten DC/DC-Wandler dazu zu steuern, die zweite Spannung auszugeben, sodass bewirkt wird, dass die Energiespeicherbatterie in jeder Energiespeichereinheit die Traktionsbatterie (210) über den ersten DC/DC-Wandler in jeder Energiespeichereinheit bei der zweiten Spannung lädt.

8. Ladevorrichtung (100) nach Anspruch 6 oder 7, **dadurch gekennzeichnet, dass** die Ladevorrichtung (100) ferner eine Trenneinheit (130) aufweist, wobei die Trenneinheit (130) zwischen den N Energiespeichereinheiten und der Traktionsbatterie (210) verbunden ist und die Trenneinheit (130) M zweite DC/DC-Wandler und ein Schaltmodul (133) aufweist, das zwischen den M zweiten DC/DC-Wandlern verbunden ist, wobei M eine positive Ganzzahl größer als oder gleich 2 ist; und
das Steuerungsmodul (160) ferner dazu eingerichtet ist:
das Schaltmodul (133) zu steuern, um zu bewirken, dass die M zweiten DC/DC-Wandler in Reihe verbunden sind, sodass die von der Trenneinheit (130) an die Traktionsbatterie (210) ausgegebene Spannung das M-fache der von den N Energiespeichereinheiten ausgegebenen Gesamtspannung ist; oder
das Schaltmodul (133) zu steuern, um zu bewirken, dass die M zweiten DC/DC-Wandler parallel verbunden sind, sodass der von der Trenneinheit (130) an die Traktionsbatterie (210) ausgegebene Strom gleich dem M-fachen des von den N Energiespeichereinheiten ausgegebenen Stroms ist.

9. Ladevorrichtung (100) nach einem der Ansprüche 6 bis 8, **dadurch gekennzeichnet, dass** die Ladevorrichtung (100) ferner einen AC/DC-Wandler (140) aufweist, wobei der AC/DC-Wandler (140) zwischen der Traktionsbatterie (210) und einer Wechselstromversorgung (150) verbunden ist; und
das Steuerungsmodul (160) ferner dazu eingerichtet ist:
ein drittes Steuerungssignal an den AC/DC-Wandler (140) zu senden, wobei das dritte Steuerungssignal dazu verwendet wird, zu steuern, dass eine von dem AC/DC-Wandler (140) ausgegebene Spannung gleich einer Ladespannung der Traktionsbatterie (210) ist, um zu bewirken, dass die Wechselstromversorgung (150) die Traktionsbatterie (210) über den AC/DC-Wandler (140) bei der Ladespannung lädt.

10. Ladevorrichtung (100) nach Anspruch 9, **dadurch gekennzeichnet, dass** das Steuerungsmodul (160) ferner dazu eingerichtet ist:
ein viertes Steuerungssignal an den AC/DC-Wandler (140) zu senden, wobei das vierte Steuerungssignal dazu verwendet wird, zu steuern, dass die von dem AC/DC-Wandler (140) ausgegebene Spannung gleich der Entladespannung der Traktionsbatterie (210) ist, um zu bewirken, dass sich die Traktionsbatterie (210) über den AC/DC-Wandler (140) bei der Entladespannung in die Wechselstromversorgung (150) entlädt.

11. Energieverwaltungssystem, das einen Prozessor aufweist, wobei der Prozessor dazu eingerichtet ist, das Ladeverfahren (40) nach einem der Ansprüche 1 bis 5 durchzuführen.

12. Ladesystem (10), **dadurch gekennzeichnet, dass** es aufweist:
eine Traktionsbatterie (210); und
die Ladevorrichtung (100) nach einem der Ansprüche 6 bis 10, wobei die Ladevorrichtung (100) dazu eingerichtet ist, die Traktionsbatterie (210) zu laden, und jeder Ladezeitraum eine Phase, in der die Traktionsbatterie (210) dazu eingerichtet ist, geladen zu werden, und eine Phase, in der die Traktionsbatterie (210) dazu eingerichtet ist, entladen zu werden, aufweist.

## Revendications

1. Procédé de charge (40) pour une batterie de traction, appliqué à un appareil de charge, l'appareil de charge comprend N unités de stockage d'énergie connectées en série, chaque unité de stockage d'énergie comprend une batterie de stockage d'énergie et un premier convertisseur CC/CC connecté à la batterie de stockage d'énergie, et chaque période de charge de l'appareil de charge comprend une étape au cours de laquelle la batterie de traction est chargée et une étape au cours de laquelle la batterie de traction se décharge dans les N unités de stockage d'énergie, N étant un nombre entier positif supérieur à 1; et
le procédé de charge (40) étant **caractérisé par le fait qu'**il comprend en outre:
dans l'étape de décharge, l'obtention (410) d'une tension de courant de la batterie de stockage d'énergie dans chaque unité de stockage d'énergie;
la détermination (420), sur la base de la tension de courant de la batterie de stockage d'énergie dans chaque unité de stockage d'énergie, une première tension délivrée par le premier convertisseur CC/CC dans chaque unité de stockage d'énergie, dans lequel la première tension délivrée par le premier convertisseur CC/CC dans chaque unité de stockage d'énergie est inversement proportionnelle à la tension de courant de la batterie de stockage d'énergie dans chaque unité de stockage d'énergie; et
l'envoi (430) d'un premier signal de commande au premier convertisseur CC/CC dans chaque unité de stockage d'énergie, dans lequel le premier signal de commande est utilisé pour commander le premier convertisseur CC/CC pour émettre la première tension, de manière à amener la batterie de stockage d'énergie dans chaque unité de stockage d'énergie à recevoir, à la première tension via le premier convertisseur CC/CC dans chaque unité de stockage d'énergie, l'énergie électrique libérée par la batterie de traction.

2. Procédé de charge (40) selon la revendication 1, **caractérisé en ce que** le procédé comprend en outre:
dans l'étape de charge, l'obtention d'une tension de courant de la batterie de stockage d'énergie dans chaque unité de stockage d'énergie;
la détermination, sur la base de la tension de courant de la batterie de stockage d'énergie dans chaque unité de stockage d'énergie, une deuxième tension délivrée par le premier convertisseur CC/CC dans chaque unité de stockage d'énergie, dans lequel la deuxième tension délivrée par le premier convertisseur CC/CC dans chaque unité de stockage d'énergie est proportionnelle à la tension de courant de la batterie de stockage d'énergie dans chaque unité de stockage d'énergie; et
l'envoi d'un deuxième signal de commande au premier convertisseur CC/CC dans chaque unité de stockage d'énergie , dans lequel le deuxième signal de commande est utilisé pour commander le premier convertisseur CC/CC pour émettre la deuxième tension, de manière à amener la batterie de stockage d'énergie dans chaque unité de stockage d'énergie à charger la batterie de traction à la deuxième tension via le premier convertisseur CC/CC dans chaque unité de stockage d'énergie.

3. Procédé de charge (40) selon la revendication 1 ou 2, **caractérisé en ce que** l'appareil de charge comprend en outre une unité de séparation, dans lequel l'unité de séparation est connectée entre les N unités de stockage d'énergie et la batterie de traction, et l'unité de séparation comprend M secondes convertisseurs CC/CC et un module de commutation connecté entre les M secondes convertisseurs CC/CC, M étant un nombre entier positif supérieur ou égal à 2 ; et
le procédé de charge (40) comprend en outre:
commander le module de commutation pour que les M seconds convertisseurs CC/CC soient connectés en série, de sorte que la tension délivrée par l'unité de séparation à la batterie de traction soit M fois la tension délivrée par les N unités de stockage d'énergie ; ou
commander le module de commutation pour que les M seconds convertisseurs CC/CC soient connectés en parallèle, de sorte que le courant émis par l'unité de séparation à la batterie de traction soit M fois le courant émis par les N unités de stockage d'énergie.

4. Procédé de charge (40) selon l'une quelconque des revendications 1 à 3, caractérisé en que l'appareil de charge comprend en outre un convertisseur CA/CC, dans lequel le convertisseur CA/CC est connecté entre la batterie de traction et une alimentation en courant alternatif; et
le procédé de charge (40) comprend en outre:
l'envoi d'un troisième signal de commande au convertisseur CA/CC, dans lequel le troisième signal de commande est utilisé pour commander la tension délivrée par le convertisseur CA/CC afin qu'elle soit égale à la tension de charge de la batterie de traction, de manière à amener l'alimentation en courant alternatif à charger la batterie de traction à la tension de charge via le convertisseur CA/CC.

5. Procédé de charge (40) selon la revendication 4, **caractérisé en ce que** le procédé de charge (40) comprend en outre:
l'envoi d'un quatrième signal de commande au convertisseur CA/CC, dans lequel le quatrième signal de commande est utilisé pour commander la tension délivrée par le convertisseur CA/CC pour qu'elle soit égale à la tension de décharge de la batterie de traction, de manière à amener la batterie de traction à se décharger vers l'alimentation en courant alternatif à la tension de décharge via le convertisseur CA/CC.

6. Appareil de charge (100) pour une batterie de traction, l'appareil de charge (100) comprend N unités de stockage d'énergie connectées en série et un module de commande (160), dans lequel chaque unité de stockage d'énergie comprend une batterie de stockage d'énergie et un premier convertisseur CC/CC connecté à la batterie de stockage d'énergie, et chaque période de charge de l'appareil de charge (100) comprend une étape au cours de laquelle la batterie de traction (210) est configuré pour être chargé et une étape au cours de laquelle la batterie de traction (210) est configurée pour se décharger vers les N unités de stockage d'énergie, N étant un nombre entier positif supérieur à 1; et
étant **caractérisé en ce que** le module de commande (160) est configuré pour:
dans l'étage de décharge, obtenir une tension de courant de la batterie de stockage d'énergie dans chaque unité de stockage d'énergie;
déterminer, sur la base de la tension de courant de la batterie de stockage d'énergie dans chaque unité de stockage d'énergie, une première tension délivrée par le premier convertisseur CC/CC de chaque unité de stockage d'énergie, dans lequel la première tension délivrée par le premier convertisseur CC/CC dans chaque unité de stockage d'énergie est inversement proportionnelle à la tension de courant de la batterie de stockage d'énergie dans chaque unité de stockage d'énergie; et
envoyer un premier signal de commande au premier convertisseur CC/CC dans chaque unité de stockage d'énergie, dans lequel le premier signal de commande est utilisé pour commander le premier convertisseur CC/CC à émettre la première tension, de manière à amener la batterie de stockage d'énergie dans chaque unité de stockage d'énergie à recevoir, à la première tension via le premier convertisseur CC/CC dans chaque unité de stockage d'énergie, l'énergie électrique libérée par la batterie de traction (210).

7. Appareil de charge (100) selon la revendication 6, **caractérisé en ce que** le module de commande (160) est en outre configuré pour:
dans l'étape de charge, obtenir une tension de courant de la batterie de stockage d'énergie dans chaque unité de stockage d'énergie;
déterminer, sur la base de la tension de courant de la batterie de stockage d'énergie dans chaque unité de stockage d'énergie, une deuxième tension délivrée par le premier convertisseur CC/CC de chaque unité de stockage d'énergie, dans lequel la deuxième tension délivrée par le premier convertisseur CC/CC dans chaque unité de stockage d'énergie est proportionnelle à la tension de courant de la batterie de stockage d'énergie dans chaque unité de stockage d'énergie; et
envoyer un deuxième signal de commande au premier convertisseur CC/CC dans chaque unité de stockage d'énergie, dans lequel le deuxième signal de commande est utilisé pour commander le premier convertisseur CC/CC pour émettre la deuxième tension, de manière à amener la batterie de stockage d'énergie dans chaque unité de stockage d'énergie à charger la batterie de traction (210) à la deuxième tension via le premier convertisseur CC/CC dans chaque unité de stockage d'énergie.

8. Appareil de charge (100) selon la revendication 6 ou 7, **caractérisé en ce que** l'appareil de charge (100) comprend en outre une unité de séparation (130), dans lequel l'unité de séparation (130) est connectée entre les N unités de stockage d'énergie et la batterie de traction (210), et l'unité de séparation (130) comprend M secondes convertisseurs CC/CC et un module de commutation (133) connecté entre les M seconds convertisseurs CC/CC, M étant un nombre entier positif supérieur ou égal à 2 ; et
le module de commande (160) est en outre configuré pour:
commander le module de commutation (133) pour que les M seconds convertisseurs CC/CC soient connectés en série, de sorte que la tension délivrée par l'unité de séparation (130) à la batterie de traction (210) soit M fois la tension totale délivrée par les N unités de stockage d'énergie ; ou
commander le module de commutation (133) pour que les M seconds convertisseurs CC/CC soient connectés en parallèle, de sorte que le courant émis par l'unité de séparation (130) à la traction la batterie (210) soit égale à M fois le courant émis par les N unités de stockage d'énergie.

9. Appareil de charge (100) selon l'une quelconque des revendications 6 à 8, **caractérisé en ce que** l'appareil de charge (100) comprend en outre un convertisseur CA/CC (140), dans lequel le convertisseur CA/CC (140) est connecté entre la batterie de traction (210) et une alimentation en courant alternatif (150); et
le module de commande (160) est en outre configuré pour:
envoyer un troisième signal de commande au convertisseur CA/CC (140), dans lequel le troisième signal de commande est utilisé pour commander la tension délivrée par le convertisseur CA/CC (140) pour qu'elle soit égale à la tension de charge de la batterie de traction (210), de manière à ce que l'alimentation en courant alternatif (150) charge la batterie de traction (210) à la tension de charge via le convertisseur CA/CC (140).

10. Appareil de charge (100) selon la revendication 9, **caractérisé en ce que** le module de commande (160) est en outre configuré pour:
envoyer un quatrième signal de commande au convertisseur CA/CC (140), dans lequel le quatrième signal de commande est utilisé pour commander la tension délivrée par le convertisseur CA/CC (140) pour qu'elle soit égale à la tension de décharge de la batterie de traction (210), de manière à amener la batterie de traction (210) à se décharger vers l'alimentation en courant alternatif (150) à la tension de décharge via le convertisseur CA/CC (140).

11. Système de gestion de l'énergie (EMS), comprenant un processeur, dans lequel le processeur est configuré pour exécuter le procédé de charge (40) selon l'une quelconque des revendications 1 à 5.

12. Système de charge (10), **caractérisé en ce qu'**il comprend:
d'une batterie de traction (210); et
l'appareil de charge (100) selon l'une quelconque des revendications 6 à 10, dans lequel l'appareil de charge (100) est configuré pour charger la batterie de traction (210), et chaque période de charge comprend une étape au cours de laquelle la batterie de traction (210) est configurée pour être chargée et une étape au cours de laquelle la batterie de traction (210) est configurée pour se décharger.
